# EUROPEAN PATENT APPLICATION

(11) **EP 4 567 069 A1**
(43) Date of publication of application: **11.06.2025**
(21) Application number: 23383250.0
(22) Date of filing: 04.12.2023
(51) Int. Cl.: C08L 55/02, C08L 23/08, C08L 83/04, C08K 3/016, C08K 3/32, C08K 3/36, C08K 5/53

(54) **FLAME-RETARDANT ABS COMPOSITION**

(71) Applicant: Elix Polymers, S.L., 43110 La Canonja (ES)
(72) Inventor: MALET MURILLO, Ramon, 08204 SABADELL (ES); PEREZ FERNANDEZ, Marc, 43003 TARRAGONA (ES); GHONJIZADEHSAMANI, Farnaz, 43110 TARRAGONA (ES); DE REDONDO REALINHO, Vera Cristina, 08222 TERRASSA (ES); HAURIE IBARRA, Laia, 08028 BARCELONA (ES)
(74) Representative: ABG Intellectual Property Law, S.L.

(57) **Abstract**

It refers to a flame-retardant ABS composition with improved mechanical properties. It refers also to a process for preparing said composition, to a moulded article prepared from said the flame-retardant ABS composition, and to the use of said composition.

## Description

### Field of the invention

The present invention relates to the field of flame-retardant ABS compositions.

### Background art

Acrylonitrile-butadiene-styrene (ABS) is an engineering thermoplastic polymer, which consists of polybutadiene as a discrete phase and styreneacrylonitrile copolymer as a continuous phase. The combination of these three components provides that ABS has excellent overall performance, good rigidity, high impact strength, heat resistance, low temperature toughness resistance, chemical resistance, mechanical strength, electrical performance, good thermal and chemical stability, easy processing, , good surface gloss, easy to paint, metal-plating, electroplating, welding and bonding, and other secondary processing. Due to its toughness, impact resistance, chemical resistance and easy processing ABS has been widely used in many applications such as electronics, automobiles, toys, tools, etc.

However, the high flammability of ABS combined with the smoke production could limit its applications. In order to improve its inherent high flammability and suppress the production of dark smoke, the use of reactive flame-retardants and flame-retardant (FR) additives in ABS has been reported.

Reactive flame-retardants are flame-retardants having reactive groups, which are copolymerized as one of the monomers in ABS synthesis. The reactive flame-retardant has insignificant effect on the mechanical properties of ABS or ABS blends. Although the dosage is generally small, the price is high, and the application is limited.

In the opposite, FR additives are widely used, although they may have a significant impact on the mechanical properties of ABS. According to its chemical structure, it can be divided into organic and inorganic FR additives.

ABS organic FR additives mainly include alkyl diaryl phosphate, triphenyl phosphate, polychlorinated benzene, perchlorocyclopentane decane, and decabromodiphenyl ether, among others. ABS inorganic FR additives include antimony trioxide, zinc borate, barium metaborate, and ammonium sulfate, among others.

Most of the drawbacks related to flame retardancy of ABS were considered almost achieved with the development of brominated FR additives. For example, in CN-A-102604314 it is disclosed a composition comprising specific amounts of ABS, bromotriazine, methacrylate-butyl acrylate-styrene (MBS), antimony trioxide, antioxidant, lubricant (EBS), high rubber powder, and other processing aids (ZnO). Also, in Huang et al., Realizing simultaneous improvements in mechanical strength, flame retardancy and smoke suppression of ABS nanocomposites from multifunctional graphene, Composites Part B, 2019, 177, 107377, it is disclosed a graphene-based multifunctional additive (Sb-Mo/Br-rGO), which leads to an increase in tensile strength and in elastic modulus relative to the ABS bulk, and further to a significant enhancement in thermal stability. In JP-A-H0733971 it is disclosed a flame-retardant resin composition having excellent mechanical and thermal properties and does not drip during burning by incorporating into ABS a brominated poly-carbonate oligomer as flame-retardant, Sb₂O₃ as flame-retardant aid, finely powdery silica, a silicone resin, and a silicone oil.

However, in the 1990s it was reported that some of these halogenated FR additives, for instance polybrominated diphenyl ethers (PBDEs), release toxic gases which adversely affect the environment and human health.

In the past years, halogen-free flame-retardants (HFFR), based on phosphorus-containing compounds with different oxidation states were developed and introduced to the industry as more environmentally friendly alternatives.

Different technical solutions have been proposed in the art to reduce the frequently seen impairment of mechanical properties of ABS compositions due to the presence of FR additives therein.

In KR-A-1020220056124 it is disclosed the use of a transition metal compound as a crosslinking agent, wherein said metal is selected from the group consisting of zirconium, aluminium, manganese, molybdenum, tungsten, tin, cobalt, titanium and copper, to avoid an impairment of the mechanical properties of ABS.

In CN-A-114316500 it is disclosed a composition comprising ABS, phosphor-based and nitrogen-based flame-retardants, EVA as toughener, a compatibilizer and an antioxidant. It is further disclosed that by adding phosphorus-based and nitrogen-based flame-retardants to ABS, a synergistic flame-retardant effect is exerted, and at the same time, the EVA added as a toughening agent can effectively toughen the flame-retardant ABS material and improve its impact strength.

In CN-A-111732812 it is disclosed a halogen-free flame-retardant ABS composition, which comprises specific amounts of ABS, ammonium polyphosphate, pentaerythritol, lubricant, antioxidant, Ni₂O₃, and liquid silicone rubber. It is further disclosed that the presence of Ni₂O₃ slows down the burning speed because it decomposes to produce NiO in an endothermic reaction, and that NiO can react with ammonium polyphosphate improving the strength of material melt and enhancing the flame-retardant effect.

In CN-A-102181123 it is disclosed a halogen-free expanded flame-retardant ABS material, which is composed of specific amounts of ABS, flame-retardant, toughening agent, compatibilizer, antioxidant, and processing aid, wherein the flame-retardant is a mixture of phosphinate and melamine salt, and the tougheners are selected from nylon elastomer (TPEA), methyl methacrylate-butadiene-styrene terpolymer (MBS), thermoplastic polyurethane (TPU), thermoplastic polyester elastomer (TPEE), ethylene methyl acrylate carbonyl copolymer (EMA) and ethylene-vinyl acetate co-polymer (EVA).

In CN-A-102936391 it is disclosed a halogen-free and phosphorus-free flame-retardant antistatic ABS resin, which has both good impact resistance and excellent flame retardancy and antistatic properties, which specific amounts of ABS resin, styrene-acrylic resin, silicone flame-retardant, sulfonate flame-retardant, antistatic agent, antioxidant, and processing aids.

In US-A-2011/144244 it is disclosed a halogen free flame-retardant resin composition comprising ABS, an inorganic filler, and a flame-retardant additive, wherein the flame-retardant additive is selected from an alkali or alkaline earth metal nitrite, nitride, borate, silicide, and silicate. It is disclosed that said compositions have excellent flame retardancy, electric insulation properties, and crack resistance, and produces only negligible amounts of toxic substances during incineration, if any at all.

In EP-A-4116376 it is disclosed an ABS resin composition comprising 25 to 50 parts by weight of a phosphorus-based flame retardant composition, with respect to 100 parts by weight of a base resin including a graft copolymer containing a rubber polymer, and a styrene-based copolymer, wherein the phosphorus-based flame retardant composition includes 30 wt% to 70 wt% of Mⁿ⁺ (diethyl phosphinate)- ₙ (M is a metal having an oxidation number of 2 to 5, and n is an integer selected from 2 to 5) and 30 wt% to 70 wt% of ammonium polyphosphate.

Thus, in spite of different proposals in the art to obtain flame-retardant compositions, there is a need for further flame-retardant ABS compositions showing a satisfactory flame-retardant behaviour as well as satisfactory mechanical properties.

### Summary of invention

An aspect of the present invention relates to a flame-retardant ABS composition.

Another aspect of the invention is a process for preparing said flame-retardant ABS composition.

Another aspect of the present invention is a moulded article prepared from said the flame-retardant ABS composition.

Another aspect of the invention is the use of said flame-retardant ABS composition.

### Description of the invention

The present invention relates to a flame-retardant ABS composition comprising:
a) an acrylonitrile-butadiene-styrene (ABS) copolymer,
b) a flame-retardant component (FR),
c) an ethylene-methyl acrylate copolymer (EMA),
d) a siloxane polymer(SP), and
e) optionally, at least one auxiliary component.

The inventors of the present invention have developed a new flame-retardant ABS composition, which surprisingly shows a synergistic effect in the Charpy notched impact test compared to ABS compositions, which do not include all the components present in the flame-retardant ABS composition.

The Charpy notched impact test is a standardized high strain rate test, widely used in industry, which determines the amount of energy absorbed by a material during fracture, said absorbed energy is a measure of the material's notch toughness.

Further, It was observed that the cone calorimeter residues of flame-retardant ABS compositions according to the invention, comprising the combination of ABS, flame-retardant component, EMA copolymer and siloxane polymer, were more expanded and cover the whole surface compared to ABS formulated only with flame-retardant.

In the present description, as well as in the claims, the singular forms "a", "an" and "the" include the plural reference unless the context clearly indicates otherwise. The term "about" refers to a deviation of plus/minus 10%, preferably plus/minus 5%. The percentages are expressed in % by weight (wt%), unless stated the contrary. The ranges defined by the terms "between ... and ..." or by the terms "from ...to..." are meant to include also said stated endpoints thereof, and they also include any narrower sub-range.

### Flame-retardant ABS composition

One aspect of the present invention is a flame-retardant ABS composition comprising an ABS copolymer, a flame-retardant component (FR), an ethylene-methyl acrylate copolymer (EMA), and a siloxane polymer(SP).

The combination of EMA and SP into a flame-retardant ABS provides a synergistic effect, providing an enhancement of toughness maintaining the self-extinguished behaviour of the composition, leading to an optimum balance of mechanical and fire behaviour. Said combination further provides a slight increase of time to ignition and an expanded residue formation in cone calorimeter tests.

### ABS

The flame-retardant ABS composition of the invention comprises an acrylonitrile-butadiene-styrene (ABS) copolymer.

The ABS copolymer is a well-known polymer comprising acrylonitrile, butadiene and styrene as monomers.

In the present invention, the expression ABS is used in the generic sense and includes known equivalents for acrylonitrile, such as methacrylonitrile, ethacrylonitrile, phenylacrylonitrile, α-chloroacrylonitrile, propacrylonitrile, among others or any combination thereof; for butadiene, such as isoprene, chloroprene, 2,3-dimethyl-1,3-butadiene, piperylene, 3-butyl-1,3-octadiene and 2-phenyl-1,3-butadiene, among others or any combination thereof, and for styrene such as α-methyl styrene, 3-methylstyrene, 4-methylstyrene, 4-propylstyrene, 1-vinylnaphthalene, 4-cyclohexylstyrene, 4-(*p*-methylphenyl)styrene, 1-vinyl-5-hexylnaphthalene, halostyrene, maleic anhydride, methyl methacrylate, *N*-phenyl maleimide, or any combination thereof.

Generally, in the flame-retardant ABS composition of the invention the content of ABS copolymer is comprised between 40 wt% and 95 wt%, preferably between 50 wt% and 90 wt%, more preferably between 60 wt% and 85 wt%.

Usually, said ABS copolymer comprises at least one grafted ABS copolymer (also named "grafted ABS" in the present description), preferably with a glass transition temperature Tg below 0° C. In a preferred embodiment it comprises further at least one rubber-free copolymer.

In an embodiment, the ABS copolymer consists or consists essentially of 100 wt% of grafted ABS copolymer.

In an embodiment, the ABS copolymer comprises between 5 wt% and 55 wt%, preferably between 15wt% and 50 wt%, of grafted ABS polymer and between 45 wt% and 95 wt%, preferably between 50 wt% and 85 wt% of rubber-free polymer.

In an embodiment, the ABS copolymer consists or consists essentially of between 5 wt% and 55 wt%, preferably between 15wt% and 50 wt%, of grafted ABS polymer and between 45 wt% and 95 wt%, preferably between 50 wt% and 85 wt% of rubber-free polymer.

The glass transition temperature (Tg) of compounds disclosed in this description is determined using standard methods and devices, such as the differential scanning calorimeter (DSC) performed according to ISO 11357-2:2020.

The ABS copolymer may be obtained by either by bulk polymerization or by emulsion polymerization.

The ABS copolymer may be made by the emulsion process, which involves in a first step a pressurized emulsion polymerization of butadiene, water, emulsifier and initiator to produce a rubber particle. In a second step, the emulsion polybutadiene rubber is reacted with styrene and acrylonitrile in a graft emulsion reaction. Finally, graft ABS is coagulated, dewatered and dried subsequently to obtain graft ABS powder. It may be compounded with free SAN copolymer which is mainly obtained by bulk method. Methods for preparing ABS copolymer by emulsion polymerization are disclosed, for example, in EP-A-0436381 and EP-A-0522710.

The ABS copolymer may be made by the bulk, mass, mass-solution, or mass-suspension polymerization process, which involve dissolving polybutadiene in styrene and acrylonitrile monomers and the subsequent graft reaction between these monomers and the polybutadiene together with acrylonitrile monomer. At the end of the reaction, relatively large particles of rubber are created which may contain some occluded styrene- acrylonitrile copolymer and a SAN copolymer matrix. Methods for preparing ABS copolymer by bulk polymerization are disclosed, for example, in EP-A-0810242.

In an embodiment the ABS copolymer is obtained by bulk polymerization process in the presence of between 3 parts and 50 parts of a butadiene polymer or styrene-butadiene copolymer, containing at least 50 parts of a grafted vinyl aromatic compound and vinyl cyanide compound, preferably styrene and acrylonitrile, in a weight ratio of between 90:10 and 50:50, more preferably in a ratio of between 70:30 and 80:20, and yet more preferably 73:27. In an embodiment, acrylonitrile may be replaced wholly or partially by methacrylonitrile, ethacrylonitrile, phenylacrylonitrile, α-chloroacrylonitrile, propacrylonitrile, or any combination thereof. In an embodiment styrene may be replaced wholly or partially by α-methyl styrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, halostyrene, maleic anhydride, methyl methacrylate, *N*-phenyl maleimide, or any combination thereof. In an embodiment butadiene may be replaced wholly or partially by isoprene, chloroprene, 2,3-dimethyl-1,3-butadiene, piperylene, 3-butyl-1,3-octadiene, and 2-phenyl-1,3-butadiene or any combination thereof.

Preferably the butadiene polymer shows an average particle diameter d₅₀ between 100 nm and 10000 nm, preferably 200 nm and 5000 nm, more preferably 400 nm and 2000 nm. In a preferred embodiment, the butadiene rubber content is comprised between 3 wt% and 50 wt%, more preferably between 5 wt% and 30 wt%, and yet more preferably between 6 wt% and 25 wt%.

In an embodiment the ABS copolymer is obtained by emulsion polymerization process, wherein the grafted ABS copolymer has a core and shell structure. The core is obtained by seed feed process, agglomeration, or direct growth process, preferably by seed feed process, and more preferably using a seed with a d₅₀ comprised between 20 nm and 100 nm, the core contains at least 40 parts, preferably between 40 and 60, more preferably between 42 and 50; preferably a mono-, bi-, tri- or multimodal, more preferably trimodal, butadiene polymer containing particle populations showing an average particle diameter d₅₀ selected between 50 nm and 200 nm, preferably between 65 nm and 150 nm, more preferably between 120 nm and 130 nm; between 220 nm and 340 nm, preferably between 240 nm and 320 nm, more preferably between 260 nm and 300; and between 340 nm and 480 nm, preferably between 350 nm and 450 nm, more preferably between 360 nm and 420 nm. In a preferred embodiment, the butadiene rubber contains 35 (wt%)⁻¹ and 97 (wt%)⁻¹ of gel content, determined using, for example, Time-Domain NMR devices, such as Minispec mq20 NMR - Polymer Research System (Bruker).

In an embodiment butadiene may be replaced wholly or partially by isoprene, chloroprene, 2,3-dimethyl-1,3-butadiene, piperylene, 3-butyl-1,3-octadiene and 2-phenyl-1,3-butadiene, or any combination thereof.

In a preferred embodiment, the grafted ABS has a Tg below 0 °C.

Usually, the shell comprises a vinyl aromatic compound and vinyl cyanide compound in a weight ratio of between 90:10 and 50:50, preferably styrene and acrylonitrile, in the presence of at least 50 parts, preferably between 50 parts and 60 parts, more preferably between 50 parts and 58 parts, of a butadiene polymer.

In an embodiment, the grafted ABS is a copolymer wherein styrene is replaced wholly or partially by α-methyl styrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, halostyrene, maleic anhydride, methyl methacrylate, *N*-phenyl maleimide, or any combination thereof.

In an embodiment, the grafted ABS is a copolymer wherein acrylonitrile is replaced wholly or partially by methacrylonitrile, ethacrylonitrile, phenylacrylonitrile, α-chloroacrylonitrile, propacrylonitrile, or any combination thereof.

In an embodiment, the grafted ABS is a copolymer, which further comprises small amounts, between 1 wt% and 10 wt%, of (meth)acrylate linear or branched C₂-C₈ alkyl esters, such as ethyl (meth)acrylate, propyl (meth)acrylate, butyl (meth)acrylate, 2-ethylhexyl (meth)acrylate, or any combination thereof.

In the emulsion polymerization process, it is obtained a colloidal latex comprising the ABS copolymer. ABS particles are recovered from such latex in a postprocessing stage, wherein a coagulation process takes place. There are several techniques that can be used in that process such as, for example, chemical, evaporative and shear and freeze coagulations. However, chemical coagulation process is the most used process due to the rapid and controlled coagulation of the latex.

Generally, the chemical coagulation process is conducted by adding aqueous salt solutions, for example, aqueous solutions of magnesium sulfate and hydrates thereof, calcium chloride, sodium chloride or a mixture thereof, and/or an aqueous acid solution, for example, sulfuric acid, acetic acid or a mixture thereof. It is preferable to use inorganic salts. In an embodiment, the precipitation solution comprises at least one salt selected from magnesium sulfate, calcium chloride and sodium chloride and/or at least one inorganic acid, preferably sulfuric acid. In an embodiment, the precipitation solution comprises at least one salt selected from magnesium sulfate, calcium chloride and sodium chloride and/or at least one organic acid, preferably acetic acid. The coagulation process may be conducted in a cascade system, wherein each container has a specific volume, and the temperature and residence time are adjusted in each container, as disclosed, for example, in GB-A-1335353 or US-2020/0377714. After the coagulation step, the coagulate formed is usually separated off from the serum, for example, by means of a plane filter, bead filter, rotary filer, or centrifuge, washed with water and dried by means of, for example, a flash drier, fluidized bed drier, pneumatic drier, or an oven.

Preferably ABS copolymer it is obtained by emulsion polymerization.

Grafted ABS copolymers are available commercially, for example, through the companies ELIX Polymers and Korea Kumho Petrochemical: Grafted ABS copolymer produced by emulsion polymerization with a butadiene content comprised between 51 wt% and 54 wt% commercially available under the trade name ELIX^{®} 152I (ELIX Polymers); Grafted ABS copolymer produced by emulsion polymerization with a butadiene content comprised between 54 wt% and 58 wt% commercially available under the trade name ELIX^{®} 158I (ELIX Polymers); Mono-modal grafted ABS copolymer produced by emulsion polymerization with a butadiene content comprised between 50 wt% and 60 wt% commercially available under the trade name KUMHO^{®} HR181 (Korea Kumho Petrochemical); grafted ABS produced by bulk polymerization is commercially available under the trade name MAGNUM^{®} 3504 (Trinseo).

The optional rubber-free copolymer is generally comprised of styrene and acrylonitrile in a weight ratio of between 90:10 and 50:50, preferably between 90:10 and 60:40, and more preferably between 90:10 and 70:30, the styrene being able to be replaced wholly or partially by α-methyl styrene, 3-methylstyrene, 4-methylstyrene, 4-propylstyrene, 1-vinylnaphthalene, 4-cyclohexylstyrene, 4-(*p-*methylphenyl)styrene, 1-vinyl-5-hexylnaphthalene, halostyrene, methyl methacrylate, maleic anhydride, *N*-phenylmaleimide, or any combination thereof, and acrylonitrile being able replaced wholly or partially by methacrylonitrile, ethacrylonitrile, phenylacrylonitrile, α-chloroacrylonitrile, propacrylonitrile, or any combination thereof.

Preferably the rubber-free copolymer comprises styrene and acrylonitrile as monomers, more preferably in a ratio of between 70:30 and 80:20, and yet more preferably 73:27.

In a preferred embodiment the rubber-free copolymer forms a hard phase with a glass transition temperature Tg of at least 20° C.

In a preferred embodiment the rubber-free copolymer has a molecular weight comprised between 20,000 Da and 300,000 Da; preferably between 100,000 Da and 200,000 Da; and more preferably between 100,000 Da and 145,000 Da.

The determination of the average molecular weight Mw of component A2 is conducted by using standard methods well known by the skilled person, for example, using Gel Permeation Chromatography (GPC), with tetrahydrofuran as solvent, polystyrene as standard polymer.

Rubber-free polymers are available commercially, for example, through the company ELIX polymers: SAN polymer showing a molecular weight of about 105,000 Da, wherein the styrene: acrylonitrile ratio is 73:27, commercially available under the trade name ELIX^{®} 230G (ELIX Polymers); SAN molecular weight of about 140,000, wherein the styrene: acrylonitrile = 73:27, commercially available under the trade name ELIX^{®} 260G (ELIX Polymers); SAN molecular weight of about 165,000, wherein the styrene: acrylonitrile = 73:27, commercially available under the trade name ELIX^{®} 280G (ELIX Polymers).

### Flame-retardant components

A flame-retardant component is a chemical added to the ABS composition, which, by the presence of an ignition source, prevents or slows the further development of ignition.

Flame-retardant chemicals may be selected from inorganic compounds, organic compounds, and mixtures thereof, wherein preferably the organic compounds are selected from organo-halogen compounds, organo-phosphorous compounds, organo-nitrogen compounds, and mixtures thereof.

In an embodiment, the flame-retardant component of the ABS composition is a non-halogen flame-retardant.

In an embodiment, the flame-retardant component of the ABS composition comprises an inorganic compound, an organo-phosphorous compound, an organo-nitrogen compound, or mixtures thereof.

In a preferred embodiment, the flame-retardant component of the ABS composition comprises an inorganic compound, an organo-phosphorous compound, or mixtures thereof, preferably it comprises an organo-phosphorous compound.

In an embodiment, the flame-retardant component of the ABS composition comprises an inorganic compound selected, for example, from ammonium polyphosphate, aluminium hydroxide, magnesium hydroxide, red phosphorous, borates, and mixtures thereof.

Said inorganic compounds are commercially available, for example, through companies such as Italmatch Chemicals.

In an embodiment, the flame-retardant component of the ABS composition comprises ammonium polyphosphate (APP) of formula (H(NH₄PO₃)ₙOH). Ammonium polyphosphate may be also in microencapsulated form.

APP usually shows a polymerization degree (n) higher than 1000, a phosphorous content about between 29 wt% and 32 wt%, a nitrogen content about between 14 wt% and 17 wt%, and a particle size comprised between 15 µm and 20 µm.

In an embodiment, the flame-retardant component comprises an organo-phosphorous compound selected from, for example, Mn⁺ (diethyl phosphinate) ⁻ₙ, wherein M is a metal having an oxidation number of 2 to 5, and n is an integer selected from 2 to 5, more specifically, may be at least one selected from the group consisting of zinc (Zn), tin (Sn), calcium (Ca), magnesium (Mg), aluminium (Al), scandium (Sc), cerium (Ce), zirconium (Zr), hafnium (Hf), antimony (Sb), and tantalum (Ta); aluminium hipophosphinate, calcium hipophosphinate, triphenyl phosphate, resorcinol bis(diphenylphosphate) (RDP), resorcinol bis (2,6-dixylenyl phosphate) (RDX), bisphenol A diphenyl phosphate (BADP), tricresyl phosphate (TCP), dimethyl methylphosphonate (DMMP), pentaerythritol spiro dimethyl phosphonate (PSDP), aluminium methyl methylphosphonate (AMMP), and mixtures thereof.

Said organo-phosphorous compounds are commercially available, for example, through companies such as Italmatch Chemicals, Clariant, or Daihachi.

In an embodiment, the flame-retardant component of the ABS composition comprises Mn⁺ (diethyl phosphinate) ⁻ₙ, wherein M is a metal having an oxidation number of 3 to 5, and n is an integer selected from to 5, more specifically, may be at least one selected from the group consisting of tin (Sn), aluminium (Al), scandium (Sc), cerium (Ce), zirconium (Zr), hafnium (Hf), antimony (Sb), and tantalum (Ta); more preferably comprises aluminium diethyl phosphinate salt.

In a preferred embodiment, the flame-retardant component of the ABS composition comprises a combination of an inorganic compound and an organo-phosphorous compound, preferably a combination of ammonium polyphosphate and Mn⁺ (diethyl phosphinate) ⁻ₙ, wherein M is a metal having an oxidation number of 2 to 5, and n is an integer selected from 2 to 5, more specifically, may be at least one selected from the group consisting of zinc (Zn), tin (Sn), calcium (Ca), magnesium (Mg), aluminium (Al), scandium (Sc), cerium (Ce), zirconium (Zr), hafnium (Hf), antimony (Sb), and tantalum (Ta); preferably a combination of ammonium polyphosphate and Mn⁺ (diethyl phosphinate) ⁻ₙ, wherein M is a metal having an oxidation number of 3 to 5, and n is an integer selected from 3 to 5, more specifically, may be at least one selected from the group consisting of tin (Sn), aluminium (Al), scandium (Sc), cerium (Ce), zirconium (Zr), hafnium (Hf), antimony (Sb), and tantalum (Ta); and more preferably a combination of ammonium polyphosphate aluminium diethyl phosphinate salt.

In a more preferred embodiment, the flame-retardant component of the ABS composition comprises a combination of ammonium polyphosphate and aluminium diethyl phosphinate salt, preferably in a ratio comprised between 1:3 and 3:1 ratio by weight, and more preferably in a 1:1 ratio by weight.

In an embodiment, the flame-retardant component of the ABS composition consists of a combination of ammonium polyphosphate and aluminium diethyl phosphinate salt, preferably in a ratio comprised between 1:3 and 3:1 ratio by weight, and more preferably in a 1:1 ratio by weight.

Organo-nitrogen compounds having flame-retardant features are, for example, melamine cyanurate, *N*-alkoxy hindered amines, melam (N2-(4,6-diamino-1,3,5-triazin-2-yl)-1,3,5-triazine-2,4,6-triamine), melem (2,5,8-triamino-heptazine or 2,5,8-triamino-tri-s-triazine), melon (polymeric imino heptazine), and mixtures thereof.

In an embodiment, the flame-retardant ABS composition comprises between 5 wt% and 30 wt%, preferably between 8 wt% and 25 wt%, more preferably between 10 wt% and 20 wt%, and yet more preferably between 12 wt% and 18 wt%, of a flame-retardant component.

### EMA copolymer

Copolymers of ethylene and methyl acrylate are known as EMA. They are solid copolymers produced by reacting ethylene with methyl acrylate, usually in a radical polymerization process.

Said copolymers are commercially available from different companies, such as, for example, Arkema (for example Lotryl^{®} 29MA03T, Lotryl^{®} 24MA005, or Lotryl^{®} 24MA02), or Entec.

EMA copolymers are available with different methyl acrylate content.

In an embodiment, the EMA comprised in the flame-retardant ABS composition of the invention comprises between 20 wt% and 40 wt% of methyl acrylate.

In an embodiment, the EMA comprised in the flame-retardant ABS composition of the invention comprises between 23 wt% and 26 wt% of methyl acrylate.

In an embodiment, the EMA comprised in the flame-retardant ABS composition of the invention comprises between 27 wt% and 31 wt% of methyl acrylate.

In an embodiment, the content of the EMA copolymer in the flame-retardant ABS composition is comprised between 1 wt% and 6 wt%, preferably between 2 wt% and 5.5 wt%, and more preferably between 3 wt% and 4.5 wt%.

### Siloxane polymer

Siloxane polymer is a synthetic siloxane polymer, which consists of an inorganic backbone silicon attached to oxygen atoms, and organic groups attached to silicon atoms, as disclosed in the review Shit et al., A Review on Silicone Rubber, Natl. Acad. Sci. Lett., DOI 10.1007/s40009-013-0150-2.

Siloxane polymer comprises polysiloxane chains, preferably polydimethyl siloxane chains. In an embodiment, said chains may be functionalized with different organic groups, such as, for example vinyl groups.

In the context of the invention, the siloxane polymer can also be designated as silicone rubber polymer.

In an embodiment, the molecular weight of the siloxane polymer is not less than 400.000 Dalton.

Siloxane polymer is commercially available through different companies, such as, for example, Sigma-Aldrich, Dow (for example, Silastic^{®} range), ThermoFisher (for example, Poly(dimethylsiloxane), or Wacker (for example, Elastosil^{®} R50050OH, Elastosil^{®} E41, or Elastosil^{®} E43).

In an embodiment, the content of siloxane polymer in the flame-retardant ABS composition is comprised between 0.5 wt% and 5 wt%, preferably between 1 wt% and 4 wt%, and more preferably between 2 wt% and 3 wt%.

In a preferred embodiment, the flame-retardant ABS composition comprises a siloxane polymer comprising a combination of a polysiloxane, preferably polydimethylsiloxane, and silica, preferably fumed silica.

In an embodiment, the siloxane polymer suitable to be used in the flame-retardant ABS composition of the invention comprises between 60 wt% and 80 wt%, preferably between 65 wt% and 75 wt%, and more preferably about 70 wt% of polysiloxane, and between 20 wt% and 40 wt%, preferably between 25 wt% and 35 wt%, and more preferably about 30 wt% of silica, preferably fumed silica.

Siloxane polymers can be mixed/compounded using mixers of mills.

A combination of siloxane polymer and silica, preferably fumed silica, is commercially available through different companies, such as, for example, Wacker, under the tradename Genioplast^{®} Pellet S, or Genioplast^{®} Pellet P Plus.

### Auxiliary components

In an embodiment, the flame-retardant ABS composition may include at least one auxiliary component to optimize the technical features of the composition.

Said auxiliary component is usually selected from silica, lubricants, polymers with a reactive group, polyester, antioxidants, mould releasing agents, pigments, visible light stabilizers, UV stabilizers, blowing agents, foaming additives, antistatic agents, antiblocking agents, heat stabilizers, impact modifiers, plasticizers, biocides, flame-retardants, tackifiers, colorants, pigments, mineral fillers, and mixtures thereof.

The necessary or advantageous auxiliary components can be added to the flame-retardant ABS compositions during their preparation, further processing, working up or final forming.

In a preferred embodiment, the flame-retardant ABS composition further comprises an auxiliary component selected from silica, lubricants, polymers with a reactive group, antioxidants, antistatic agents, mould releasing agents, colorants, pigments, mineral fillers, visible light and UV stabilizers, and mixtures thereof.

In an embodiment, the flame-retardant ABS composition of the invention may further comprise silica.

Silica is silicon dioxide, most commonly found in nature as quartz. It exists as a compound of several minerals and a synthetic product. In an embodiment, the silica used in the ABS composition of the invention is a synthetic product such as fumed silica, also named pyrogenic silica, because it is produced in a flame.

Generally, the content of silica in the flame-retardant ABS composition, if present, is between 0.15 wt% and 1.5 wt%, preferably it is comprised between 0.2 wt% and 1.0 wt%, and more preferably between 0.5 wt% and 0.8 wt.

In an embodiment, the flame-retardant ABS composition of the invention may further comprise a lubricant.

The lubricant in the flame-retardant composition may be selected, for example, from metal stearates, such as magnesium stearate, among others, paraffin oils, polyethylene waxes, lauric acid, palmitic acid, stearic acid, stearic acid amides, ethylenediamine, glycerol, and mixtures thereof; preferably it is selected from metal stearates, ethylene bis stearamide (EBS), pentaerythritol tetrastearate (PETS), paraffin oils, stearic acid, glycerol monostearate, stearyl stearate, butyl stearate, polyethylene waxes, and mixtures thereof.

Generally, the content of lubricant in the flame-retardant ABS composition, if present, is comprised between 1 wt% and 5 wt%, preferably between 1.5 wt% and 3.5 wt%, and more preferably between 1.8 wt% and 2.5 wt.

In an embodiment, the flame-retardant ABS composition of the invention may include a polymer with a reactive group. The reactive group is preferably selected from an epoxy group, *N*-phenylmaleimide (N-PMI) group and maleic anhydride (MAH) group. Any compatibilizer having these reactive groups may be used without limitation in the present invention. In an embodiment, said polymer comprises any of the following monomers glycidyl methacrylate, maleic anhydride, *N*-phenylmaleimide, and mixtures thereof in combination with styrene or α-methylstyrene; more preferably said polymer is selected from a copolymer of styrene and maleic anhydride (SMA) and a copolymer of styrene, maleic anhydride and *N*-phenylmaleimide (SMI); yet more preferably it is a copolymer of styrene and maleic anhydride (SMA).

Generally, the molecular weight of the styrene maleic anhydride copolymer (SMA) is 20,000-300,000 Da, wherein the content of MAH is below 50 wt%; preferably it is 50,000-180,000 Da with MAH content preferably from 15 wt% and 35 wt%.

Generally, the molecular weight of the styrene, maleic anhydride and *N-*phenylmaleimide copolymer (SMI) is 20,000-300,000 Da, wherein the content of MAH is below 30 wt% and the content of N-PMI is below 55 wt%; preferably a molecular weight 90,000-200,000 Da with the content of MAH preferably between 1 wt% and 25 wt% and the N-PMI content preferably between 10 wt% and 55 wt%. and more preferably between 10 wt% and 35 wt%.

Polymers with a reactive group are commercially available: for example, SMA polymer showing a molecular weight of about 110,000, MAH content of 23 wt%, commercially available under the trade name XIRAN^{®} SZ23110 (Polyscope Polymers), SMA polymer showing a molecular weight of about 120,000, MAH content of 26 wt%, commercially available under the trade name XIRAN^{®} SZ26120 (Polyscope Polymers), SMI polymer showing a molecular weight of about 145,000, MAH content of 10 wt%, N-PMI content of 18 wt%, commercially available under the trade name XIRAN^{®} IZ1018M (Polyscope Polymers), SMI polymer showing a molecular weight of about 150,000, MAH content of 7 wt%, N-PMI content of 21 wt%, commercially available under the trade name XIRAN^{®} IZ 0721M (Polyscope Polymers).

Generally, the content of the polymer with a reactive group in the flame-retardant ABS composition, if present, is comprised between 1 wt% and 10 wt%, preferably between 2 wt% and 8 wt%, and more preferably between 2 wt% and 5 wt%.

Antioxidants include, for example, phosphorus-based antioxidants (i.e., phosphites), phenol-based antioxidants, thioesters, and hindered phenol antioxidants.

Said light and UV stabilizers include, for example, benzotriazoles and Hindered Amine Light Stabilizer (HALS).

Those additives are well known by the skilled person and are available commercially. Light stabilizers and antioxidants are offered under, for example, the trade names IRGANOX^{®}, IRGAFOS^{®}, TINUVIN^{®} (BASF).Antistatic agents include, for example, cationic compounds (quaternary ammonium, phosphonium or sulfonium salts), anionic compounds (alkylsulfonates, alkyl sulfates, alkyl phosphates, carboxylates in the form of alkali or alkaline earth metal salts), nonionic compounds (polyethylene glycol esters, polyethylene glycol ethers, fatty acid esters, ethoxylated fatty amines) and polyol derivatives; preferably they are nonionic compounds, more preferably they are selected from polyethylene glycol esters, polyethylene glycol ethers, fatty acid esters, polyalkylene ethers, ethoxylated fatty amines and polyol derivatives, and yet more preferably they are polyethylene ethers.

Said mould release agents include, for example, silicone-based release agents, magnesium stearates, calcium stearates, zinc stearate and magnesium oxides; preferably they are magnesium stearates, magnesium oxides, silicone-based release agents or mixtures thereof, more preferably they are silicone-based release agent, magnesium stearate, or mixtures thereof, and yet more preferably they are a combination of magnesium stearate and a silicone-based release agent.

Those additives are well known by the skilled person and are available commercially. Releasing agents are available, for example, under the tradenames KEMILUB^{®} (UNDESA) and WACKER^{®} AK (Wacker).

The flame-retardant ABS composition of the invention can include further dyes, pigments and mineral fillers to obtain coloured articles. It can be included, for example, carbon black, calcium carbonate, iron oxides, or mixtures thereof.

Generally, the amount of the auxiliary component to be used in the flame-retardant ABS composition is easily determined by the skilled person considering the final use and the required performance of said composition.

In an embodiment, the flame-retardant ABS composition comprises between 5 wt% and 30 wt% of a flame-retardant component, between 1 wt% and 6 wt% of ethylene-methyl acrylate copolymer, and 0.5 wt% and 5 wt% of siloxane polymer, wherein the sum of the wt% of the components, including the wt% of ABS copolymer, is 100 wt%.

In an embodiment, the flame-retardant ABS composition comprises between 5 wt% and 30 wt% of a flame-retardant component, between 1 wt% and 6 wt% of ethylene-methyl acrylate copolymer, between 0.5 wt% and 5 wt% of siloxane polymer, and between 0 wt% and 30 wt% of auxiliary components, wherein the sum of the wt% of the components, including the wt% of ABS copolymer, is 100 wt%.

In an embodiment, the flame-retardant ABS composition comprises between 5 wt% and 30 wt% of a flame-retardant component, between 1 wt% and 6 wt% of ethylene-methyl acrylate copolymer, between 0.35 wt% and 3.5 wt% of siloxane polymer, and between 0.15 wt% and 1.5 wt% of silica, preferably fumed silica, wherein the sum of the wt% of the components, including the wt% of ABS copolymer, is 100 wt%.

### Process for preparing the flame-retardant ABS composition

Another aspect of the invention is a process for preparing the flame-retardant ABS composition.

The process for preparing the flame-retardant ABS composition of the invention is simple and can be conducted in standard industrial equipment, such as screw machine for compounding processes. For example, that process can include:
1) mixing the ABS copolymer, the EMA copolymer, and the siloxane polymer for a period of time enough to get a homogeneous distribution of the components, e.g., 1-10 min,
2) feeding the mixture of step 1) and the flame-retardant component or mixture of flame-retardant components in a screw machine maintaining the melt temperature comprised between 190° C and 300° C, and
3) obtaining pellets comprising the flame-retardant ABS composition.

In an embodiment, the optional auxiliary components are comprised in the ABS copolymer.

### Processing of the flame-retardant ABS composition

The processing of the pellets of flame-retardant ABS composition can be conducted using conventional processing equipment and includes, for example, processing by injection moulding, sheet extrusion with subsequent thermoforming, and calendaring.

The injection process using the flame-retardant ABS composition of the invention can achieve a temperature comprised between 190 °C and 240°C, preferably between 195 °C and 230 °C, using high speed and pressure. Under such circumstances, no product degradation is shown.

An aspect of the present invention is a moulded article prepared from the flame-retardant ABS composition of the invention.

### Use of the flame-retardant ABS composition

Another aspect of the present invention is the use of the flame-retardant ABS composition of the invention in extrusion, injection, and compression moulding.

The flame-retardant ABS composition of the invention shows the following advantages.

It has well-balanced mechanical and thermal properties as shown in the examples, which provide capacity to be processed and used in a wide range of applications, exhibiting an optimized impact resistance/flow ability ratio that makes it suitable to be used in different processing methods such as extrusion and injection.

Surprisingly, articles obtained from the flame-retardant ABS composition show an improved toughness by maintaining a satisfactory flammability behaviour.

The flame-retardant ABS composition is suitable to be used in injection moulding applications; additionally, it can be used on complex moulds and even for thin-walled parts.

The flame-retardant ABS composition is suitable to incorporate different pigments in order to obtain a coloured article with excellent technical features.

The present invention may be defined according to the following embodiments:
1.- A flame-retardant ABS composition comprising:
   a) an acrylonitrile-butadiene-styrene (ABS) copolymer,
   b) a flame-retardant component (FR),
   c) an ethylene-methyl acrylate copolymer (EMA),
   d) a siloxane polymer (SP), and
   e) optionally, at least one auxiliary component.
2.- The flame-retardant ABS composition according to embodiment 1, wherein the content of ABS copolymer is comprised between 40 wt% and 95 wt%, preferably between 50 wt% and 90 wt%, more preferably between 60 wt% and 85 wt%.
3- The flame-retardant ABS composition according to embodiment 1 or 2, wherein the ABS copolymer comprises at least one grafted ABS copolymer, preferably having a glass transition temperature Tg below 0° C, and at least one rubber-free copolymer.
4.- The flame-retardant ABS composition according to embodiment 3, wherein the content of grafted ABS copolymer ABS copolymer comprises between 5 wt% and 55 wt%, preferably between 15wt% and 50 wt%, of grafted ABS polymer and between 45 wt% and 95 wt%, preferably between 50 wt% and 85 wt% of rubber-free polymer.
5.- The flame-retardant ABS composition according to embodiment 3, wherein the grafted ABS copolymer is obtained by either by bulk polymerization or by emulsion polymerization, preferably by emulsion polymerization.
6.- The flame-retardant ABS composition according to embodiment 5, wherein the ABS copolymer is obtained by bulk polymerization process in the presence of between 3 parts and 50 parts of a butadiene polymer or styrene-butadiene copolymer, containing at least 50 parts of a grafted vinyl aromatic compound and vinyl cyanide compound, preferably styrene and acrylonitrile, in a weight ratio of between 90:10 and 50:50, more preferably in a ratio of between 70:30 and 80:20, and yet more preferably 73:27,
   wherein preferably the butadiene polymer shows an average particle diameter d₅₀ between 100 nm and 10000 nm, more preferably between 200 nm and 5000 nm, and yet more preferably between 400 nm and 2000 nm, and
   wherein preferably the butadiene rubber content is comprised between 3 wt% and 50 wt%, more preferably between 5 wt% and 30 wt%, and yet more preferably between 6 wt% and 25 wt%.
7.- The flame-retardant ABS composition according to embodiment 5, wherein the grafted ABS copolymer is obtained by emulsion polymerization process, having a core and shell structure, wherein the core is obtained by seed feed process, agglomeration, or direct growth process, preferably by seed feed process, and more preferably using a seed with a d50 comprised between 20 nm and 100 nm, the core contains at least 40 parts, preferably between 40 and 60, more preferably between 42 and 50; preferably a mono-, bi-, tri- or multimodal, more preferably trimodal, butadiene polymer containing particle populations showing an average particle diameter d50 selected between 50 nm and 200 nm, preferably between 65 nm and 150 nm, more preferably between 120 nm and 130 nm; between 220 nm and 340 nm, preferably between 240 nm and 320 nm, more preferably between 260 nm and 300; and between 340 nm and 480 nm, preferably between 350 nm and 450 nm, more preferably between 360 nm and 420 nm. In a preferred embodiment, the butadiene rubber contains 35 (wt%)⁻¹ and 97 (wt%)⁻¹ of gel content.
8.- The flame-retardant ABS composition according to embodiment 7, wherein the shell comprises a vinyl aromatic compound and vinyl cyanide compound in a weight ratio of between 90:10 and 50:50, preferably styrene and acrylonitrile, in the presence of at least 50 parts, preferably between 50 parts and 60 parts, more preferably between 50 parts and 58 parts, of a butadiene polymer.
9.- The flame-retardant ABS composition according to any one of embodiments 2 to 8, wherein the grafted ABS is a copolymer wherein styrene is wholly or partially replaced by α-methyl styrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, halostyrene, maleic anhydride, methyl methacrylate, *N*-phenyl maleimide, or any combination thereof.
10.- The flame-retardant ABS composition according to any one of embodiments 2 to 9, wherein the grafted ABS is a copolymer wherein acrylonitrile is replaced wholly or partially by methacrylonitrile, ethacrylonitrile, phenylacrylonitrile, α-chloroacrylonitrile, propacrylonitrile, or any combination thereof.
11.- The flame-retardant ABS composition according to any one of embodiments 2 to 10, wherein the grafted ABS is a copolymer wherein butadiene is replaced wholly or partially by isoprene, chloroprene, 2,3-dimethyl-1,3-butadiene, piperylene, 3-butyl-1,3-octadiene, and 2-phenyl-1,3-butadiene, or any combination thereof.
12.- The flame-retardant ABS composition according to any one of embodiments 3 to 11 , wherein the rubber-free copolymer is comprised of styrene and acrylonitrile in a weight ratio of between 90:10 and 50:50, preferably between 90:10 and 60:40, and more preferably between 90:10 and 70:30, the styrene being able to be replaced wholly or partially by α-methyl styrene, 3-methylstyrene, 4-methylstyrene, 4-propylstyrene, 1-vinylnaphthalene, 4-cyclohexylstyrene, 4-(*p-*methylphenyl)styrene, 1-vinyl-5-hexylnaphthalene, halostyrene, methyl methacrylate, maleic anhydride, *N*-phenylmaleimide, or any combination thereof, and acrylonitrile being able replaced wholly or partially by methacrylonitrile, ethacrylonitrile, phenylacrylonitrile, α-chloroacrylonitrile, propacrylonitrile, or any combination thereof.
13.- The flame-retardant ABS composition according to embodiment 12, wherein the rubber-free copolymer comprises styrene and acrylonitrile as monomers, preferably in a ratio of between 70:30 and 80:20, and more preferably 73:27.
14.- The flame-retardant ABS composition according to any one of embodiments 3 to 13 , wherein the rubber-free copolymer forms a hard phase with a glass transition temperature Tg of at least 20° C.
15.- The flame-retardant ABS composition according to any one of embodiments 3 to 14 , wherein the rubber-free copolymer has a molecular weight comprised between 20,000 Da and 300,000 Da; preferably between 100,000 Da and 200,000 Da; and more preferably between 100,000 Da and 145,000 Da.
16.- The flame-retardant ABS composition according to any one of embodiments 1 to 15 , wherein the flame-retardant component is selected from inorganic compounds, organic compounds, and mixtures thereof, and wherein preferably the organic compounds are selected from organo-halogen compounds, organo-phosphorous compounds, organo-nitrogen compounds, and mixtures thereof.
17.- The flame-retardant ABS composition according to embodiment 16, wherein the flame-retardant component comprises an inorganic compound, an organo-phosphorous compound, an organo-nitrogen compound, or mixtures thereof, preferably an inorganic compound, an organo-phosphorous compound, or mixtures thereof, and more preferably a combination of an inorganic compound and an organo-phosphorous compound.
18.- The flame-retardant ABS composition according to embodiment 17, wherein the flame-retardant component comprises an inorganic compound selected from ammonium polyphosphate, aluminium hydroxide, magnesium hydroxide, red phosphorous, borates, and mixtures thereof, preferably ammonium polyphosphate.
19.- The flame-retardant ABS composition according to embodiment 17, wherein the flame-retardant component comprises an organo-phosphorous compound, preferably selected from Mn⁺ (diethyl phosphinate) ⁻ₙ, wherein M is a metal having an oxidation number of 2 to 5, and n is an integer selected from 2 to 5, more specifically, preferably at least one selected from the group consisting of zinc (Zn), tin (Sn), calcium (Ca), magnesium (Mg), aluminium (Al), scandium (Sc), cerium (Ce), zirconium (Zr), hafnium (Hf), antimony (Sb), and tantalum (Ta), preferably Mn⁺ (diethyl phosphinate) ⁻ₙ, wherein M is a metal having an oxidation number of 3 to 5, and n is an integer selected from to 5, preferably at least one selected from the group consisting of tin (Sn), aluminium (Al), scandium (Sc), cerium (Ce), zirconium (Zr), hafnium (Hf), antimony (Sb), and tantalum (Ta), more preferably aluminium diethyl phosphinate salt; aluminium hipophosphinate, calcium hipophosphinate, triphenyl phosphate, resorcinol bis(diphenylphosphate) (RDP), resorcinol bis (2,6-dixylenyl phosphate) (RDX), bisphenol A diphenyl phosphate (BADP), tricresyl phosphate (TCP), dimethyl methylphosphonate (DMMP), pentaerythritol spiro dimethyl phosphonate (PSDP), aluminium methyl methylphosphonate (AMMP), and mixtures thereof.
20.- The flame-retardant ABS composition according to embodiment 17, wherein the flame-retardant component comprises a combination of an inorganic compound and an organo-phosphorous compound.
21.- The flame-retardant ABS composition according to embodiment 20, wherein the flame-retardant component comprises a combination of ammonium polyphosphate and Mn⁺ (diethyl phosphinate) ⁻ₙ, wherein M is a metal having an oxidation number of 2 to 5, and n is an integer selected from 2 to 5, preferably at least one selected from the group consisting of zinc (Zn), tin (Sn), calcium (Ca), magnesium (Mg), aluminium (Al), scandium (Sc), cerium (Ce), zirconium (Zr), hafnium (Hf), antimony (Sb), and tantalum (Ta); preferably a combination of ammonium polyphosphate and Mn⁺ (diethyl phosphinate) ⁻ₙ, wherein M is a metal having an oxidation number of 3 to 5, and n is an integer selected from 3 to 5, preferably at least one selected from the group consisting of tin (Sn), aluminium (Al), scandium (Sc), cerium (Ce), zirconium (Zr), hafnium (Hf), antimony (Sb), and tantalum (Ta); and more preferably a combination of ammonium polyphosphate aluminium diethyl phosphinate salt.
22.- The flame-retardant ABS composition according to embodiment 21, wherein the flame-retardant component comprises a combination of ammonium polyphosphate and aluminium diethyl phosphinate salt, preferably in a ratio comprised between 1:3 and 3:1 ratio by weight, and more preferably in a 1:1 ratio by weight.
23.- The flame-retardant ABS composition according to any one of embodiments 1 to 22, wherein it comprises between 5 wt% and 30 wt%, preferably between 8 wt% and 25 wt%, more preferably between 10 wt% and 20 wt%, and yet more preferably between 12 wt% and 18 wt%, of a flame-retardant component.
24.- The flame-retardant ABS composition according to any one of embodiments 1 to 23, wherein the EMA copolymer comprises between 20 wt% and 40 wt% of methyl acrylate.
25.- The flame-retardant ABS composition according to embodiment 24, wherein the EMA copolymer comprises between 23 wt% and 26 wt% of methyl acrylate.
26.- The flame-retardant ABS composition according to embodiment 24, wherein the EMA copolymer comprises between 27 wt% and 31 wt% of methyl acrylate.
27.- The flame-retardant ABS composition according to any one of embodiments 1 to 26, wherein the content of the EMA copolymer is comprised between 1 wt% and 6 wt%, preferably between 2 wt% and 5.5 wt%, and more preferably between 3 wt% and 4.5 wt%.
28.- The flame-retardant ABS composition according to any one of embodiments 1 to 27, wherein the siloxane polymer comprises polysiloxane chains, preferably polydimethyl siloxane chains.
29.- The flame-retardant ABS composition according to any one of embodiments 1 to 28, wherein the content of siloxane polymer is comprised between 0.5 wt% and 5 wt%, preferably between 1 wt% and 4 wt%, and more preferably between 2 wt% and 3 wt%.
30.- The flame-retardant ABS composition according to any one of embodiments 1 to 29, wherein the siloxane polymer comprises a combination of a polysiloxane, preferably polydimethylsiloxane, and silica, preferably fumed silica.
31.- The flame-retardant ABS composition according to embodiment 30, wherein the siloxane polymer comprises between 60 wt% and 80 wt%, preferably between 65 wt% and 75 wt%, and more preferably about 70 wt% of polysiloxane, preferably polydimethylsiloxane, and between 20 wt% and 40 wt%, preferably between 25 wt% and 35 wt%, and more preferably about 30 wt% of silica, preferably fumed silica.
32.- The flame-retardant ABS composition according to any one of embodiments 1 to 31, wherein it further includes at least one auxiliary component, preferably selected from
   silica, lubricants, polymers with a reactive group, polyester, antioxidants, mould releasing agents, pigments, visible light stabilizers, UV stabilizers, blowing agents, foaming additives, antistatic agents, antiblocking agents, heat stabilizers, impact modifiers, plasticizers, biocides, flame-retardants, tackifiers, colorants, pigments, mineral fillers, and mixtures thereof.
33.- The flame-retardant ABS composition according to embodiment 32, wherein the content of silica is between 0.15 wt% and 1.5 wt%, preferably it is comprised between 0.2 wt% and 1.0 wt%, and more preferably between 0.5 wt% and 0.8 wt.
34.- The flame-retardant ABS composition according to embodiment 32, wherein the lubricant is selected from metal stearates, paraffin oils, polyethylene waxes, lauric acid, palmitic acid, stearic acid, stearic acid amides, ethylenediamine, glycerol, and mixtures thereof; preferably it is selected from metal stearates, ethylene bis stearamide (EBS), pentaerythritol tetrastearate (PETS), paraffin oils, stearic acid, glycerol monostearate, stearyl stearate, butyl stearate, polyethylene waxes, and mixtures thereof.
35.- The flame-retardant ABS composition according to embodiment 34, wherein the content of lubricant is comprised between 1 wt% and 5 wt%, preferably between 1.5 wt% and 3.5 wt%, and more preferably between 1.8 wt% and 2.5 wt.
36.- The flame-retardant ABS composition according to embodiment 1, wherein it comprises between 5 wt% and 30 wt% of a flame-retardant component, between 1 wt% and 6 wt% of ethylene-methyl acrylate copolymer, and 0.5 wt% and 5 wt% of siloxane polymer, wherein the sum of the wt% of the components, including the wt% of ABS copolymer, is 100 wt%.
37.- The flame-retardant ABS composition according to embodiment 1, wherein it comprises between 5 wt% and 30 wt% of a flame-retardant component, between 1 wt% and 6 wt% of ethylene-methyl acrylate copolymer, between 0.5 wt% and 5 wt% of siloxane polymer, and between 0 wt% and 30 wt% of auxiliary components, wherein the sum of the wt% of the components, including the wt% of ABS copolymer, is 100 wt%.
38.- The flame-retardant ABS composition according to embodiment 1, wherein it comprises between 5 wt% and 30 wt% of a flame-retardant component, between 1 wt% and 6 wt% of ethylene-methyl acrylate copolymer, between 0.35 wt% and 3.5 wt% of siloxane polymer, and between 0.15 wt% and 1.5 wt% of silica, preferably fumed silica, wherein the sum of the wt% of the components, including the wt% of ABS copolymer, is 100 wt%.
39.- A process for preparing the flame-retardant ABS composition according to claims 1 to 38 comprising:
   1) mixing the ABS copolymer, the EMA copolymer, and the siloxane polymer for a period of time enough to get a homogeneous distribution of the components,
   2) feeding the mixture of step 1) and the flame-retardant component or mixture of flame-retardant components in a screw machine maintaining the melt temperature comprised between 190° C and 300° C, and
   3) obtaining pellets comprising the flame-retardant ABS composition.
40.- A moulded article prepared from the flame-retardant ABS composition of any one of embodiments 1 to 38.
41.- Use of the flame-retardant ABS composition of any one of embodiments 1 to 38 in extrusion, injection, and compression moulding.

### Examples

Acrylonitrile-butadiene-styrene copolymer (ABS, was provided by Elix Polymers (Tarragona, Spain). According to the manufacturer, said copolymer contains 55 wt% ABS grafted with 45 wt% SAN and has an impact strength of 24 KJ/m² and a melt volume rate of 20 cm³/10 min, measured at 220 °C and 10 kg.

Ammonium polyphosphate (APP), Exolit^{®} AP422, and micro encapsulated APP (MAPP), Exolit^{®} AP462 were supplied by Clariant Produkte (Sulzbach, Germany), and used as flame-retardant. APP and MAPP, with chemical formula (H(NH₄PO₃)ₙOH), possess a polymerization degree (n) higher than 1000 and a phosphorus content comprised between 31 wt% and 32 wt% and between 29 wt% and 31 wt%, respectively, and nitrogen content comprised between 14 wt% and 15 wt% and between 15 wt% and 17 wt%, respectively, with average particle size of 15 µ and 20 µ, respectively, and a density of 1.90 g/cm³ for both APP and MAPP.

Aluminium diethyl phosphinate salt Exolit^{®} OP1230 (AlPi) was supplied by Clariant Produkte (Sulzbach, Germany), with chemical formula of Al(Et₂PO₂)₃, has a phosphorus content comprised between 23.3 wt% and 24 wt%, a density of 1.35 g/cm³; an average particle size comprised between 20 µm and 40 µm, as reported by the manufacturer.

The halogen-free flame-retardant Phoslite^{®} B375A was provided by Italmatch Chemical (Genova, Italy) with a phosphorus content of 33 wt% and a density of 0.45 g/cm³.

The halogen-free solid type phosphate ester PX-200 was supplied by Daihachi (Osaka, Japan), with a phosphorus content of 9 wt% and a melting point of 95 °C.

Ethylene methyl acrylate (EMA) LOTRYL^{®} 29 MA 03T (EMA29) with an average content of methyl acrylate comprised between 27 wt% and 31 wt% , and LOTRYL^{®} 24 MA 005 (EMA24), with an average content of methyl acrylate comprised between 23 wt% and 26 wt% were provided by Arkema (Colombes, France).

Siloxane polymer (SP), GENIOPLAST^{®} PELLET S (GPPS), a pelletized silicone gum formulation with a high loading of ultrahigh molecular weight siloxane polymer (70 wt%) and fumed silica (30 wt%) was supplied by Wacker (Munich, Germany).

Charpy notched impact strength was determined using a Zwick HIT 5.5P testing machine. Specimens were tested according to ISO 179 standard. Specimens were 70 ± 0.5 mm in long, 10 ± 0.1 mm wide and 4±0.1 mm thick and with a notch depth of 2 mm. All specimens were tested using a pendulum size of 1 J at room temperature.

The flammability behaviour was investigated by the UL-94 test on 125 × 13 × 4 mm³, 125 × 13 × 3.2 and 125 × 13 × 1.6 mm³ specimens ignited from one side of specimens in the vertical configuration according to ASTM D 3801 standard.

Reaction-to-fire tests were carried out by means of a cone calorimeter (INELTEC, Barcelona, Spain) according to ISO 5660 standard procedure. Specimens with diameter of 75 ± 0.1 mm and thickness of 4 ± 0.1 mm were irradiated with a constant heat flux of 35 kW/m² using a constant distance between the electrical resistance and the specimen of 25 mm. Heat release rate (HRR) vs. time curves were registered during the tests. Typical fire-reaction parameters such as time to ignition (TTI), peak of the heat release rate (PHRR), the time to PHRR (tPHRR), total heat emitted (THE), effective heat of combustion (EHC), residue and fire index growth rate (FIGRA) were obtained from the cone calorimeter tests. The residue after cone calorimetry was observed by scanning electron microscope (SEM) to identify the quality of the protective layer and also to analyse the structure formed under that layer.

### Examples 1 - 6: Preparation of flame-retardant ABS compositions

Flame-retardant ABS compositions according to the invention were prepared according to the following process.

In a first step, ABS pellets were pre-dried at 80 °C for 4 hours and flame-retardant components at 110 °C for 12 hours.

All the samples comprising specific amounts of ABS, ethylene -methyl acrylate copolymer (EMA), flame-retardant component (FR) and siloxane polymer (SP) were melt-compounded in a Brabender mixing chamber at 160° C with a rotating rate of 60 rpm for 5-7 minutes.

After compounding, circular plates with a diameter of 75 mm and thickness of 4 mm and specimens of 3.2 mm and 1.6 mm thickness were prepared by using compression moulding technique in a hot-plate press IQAP-LAP PL-15, applying a temperature of 170° C and 80 bar of pressure.

The flame-retardant compositions, wherein the percentages are expressed in wt%, and the Charpy notched impact test results in KJ/m², prepared according to said process are shown in Table I:

**TABLE I**

| | Ex. 1 | Ex. 2 | Ex. 3 | Ex. 4 | Ex. 5 | Ex. 6 |
|---|---|---|---|---|---|---|
| ABS | 73 | 82,5 | 80,5 | 78 | 77 | 69 |
| EMA29 | 5 | 2 | 3,5 | 5 | 4 | 4 |
| SP | 2 | 0,5 | 1 | 2 | 4 | 2 |
| FR | 20 | 15 | 15 | 15 | 15 | 25 |
| FR type | APP:AIP i (1:1) | Px-200 | APP:AlPi (4:1) | Phoslite B375A | APP:AlPi (1:1) | APP:AIP i (4:1) |
| Charpy notche d Impact | 10.3±0.4 | 10.15±0. 2 | 10.48±0. 2 | 6.55±0.1 2 | 11.74±0. 3 | 5.99±0.1 |

The flammability behaviour of the flame-retardant ABS compositions according to the invention was satisfactory according to the results obtained by UL-94 vertical burning tests for samples with different thickness.

It was observed that the cone calorimeter residues of flame-retardant ABS compositions according to the invention, comprising the combination of EMA copolymer and siloxane polymer, were more expanded and cover the whole surface compared to ABS formulated with flame-retardant.

Flame-retardant compositions according to the invention and comparative ABS compositions were tested for Charpy impact. Table II shows said compositions, wherein the percentages are expressed in wt%, and the Charpy impact results in KJ/m²:

**TABLE II**

| | Ex. 1 | Ex. 7 | Comp. Ex. 1 | Comp. Ex. 2 | Comp. Ex. 3 | Comp. Ex. 4 |
|---|---|---|---|---|---|---|
| ABS | 73 | 73 | 80 | 78 | 75 | 75 |
| EMA29 | 5 | - | - | - | 20 | - |
| EMA24 | - | 5 | - | - | - | 20 |
| SP | 2 | 2 | - | 2 | - | - |
| FR | 20 | 20 | 20 | 20 | 5 | 5 |
| FR type | APP:AlPi (1:1) | APP:AlPi (1:1) | APP:AlPi (1:1) | APP:AlPi (1:1) | APP:AlPi (1:1) | APP:AlPi (1:1) |
| Charpy notched Impact | 10.3±0.4 | 8.7±0.4 | 3.3±0.2 | 5.4±0.1 | 6.5±0.3 | 5.9±0.6 |

A synergistic effect was identified by comparing the results of the Charpy notched impact test obtained with flame-retardant ABS compositions according to the invention and with comparative compositions, as shown in Table III:

**TABLE III**

| Example | Components | Increase vs. ABS + FR (Comp. Ex. 1) | Calculated theoretical increase |
|---|---|---|---|
| Comp. Ex. 2 | SP | 2.1 (=5.4-3.3) | - |
| Comp. Ex. 3 | EMA24 | 3.2 (=6.5-3.3) | - |
| Comp. Ex. 4 | EMA29 | 2.6 (=5.9-3.3) | - |
| Ex. 7 | EMA24 + SP | **5.4** (=8.7-3.3) | **4.7** (=2.1+2.6) |
| Ex. 1 | EMA29 + SP | **7.0** (=10.3-3.3) | **5.3** (=2.1+3.2) |

It can be observed that when including ethylene-methyl acrylate copolymer and siloxane polymer in the flame-retardant ABS composition the Charpy notched impact increased significantly more than expected, if additive effects were in place, showing a synergy between those components (Example 7: 5.4 (experimental) > 4.7 (calculated); Example 1: 7.0 (experimental) > 5.3 (calculated).

## Claims

1. A flame-retardant ABS composition comprising:
a) an acrylonitrile-butadiene-styrene (ABS) copolymer,
b) a flame-retardant component (FR),
c) an ethylene-methyl acrylate copolymer (EMA),
d) a siloxane polymer (SP), and
e) optionally, at least one auxiliary component.

2. The flame-retardant ABS composition according to claim 1, wherein the content of ABS copolymer is comprised between 40 wt% and 95 wt%.

3. The flame-retardant ABS composition according to claim 1 or 2, wherein the flame-retardant component is selected from inorganic compounds, organic compounds, and mixtures thereof, and wherein preferably the organic compounds are selected from organo-halogen compounds, organo-phosphorous compounds, organo-nitrogen compounds, and mixtures thereof.

4. The flame-retardant ABS composition according to claim 3, wherein the flame-retardant component comprises an inorganic compound, an organo-phosphorous compound, an organo-nitrogen compound, or mixtures thereof, preferably an inorganic compound, an organo-phosphorous compound, or mixtures thereof, and more preferably a combination of an inorganic compound and an organo-phosphorous compound.

5. The flame-retardant ABS composition according to claim 4, wherein the flame-retardant component comprises an inorganic compound selected from ammonium polyphosphate, aluminium hydroxide, magnesium hydroxide, red phosphorous, borates, and mixtures thereof, preferably ammonium polyphosphate.

6. The flame-retardant ABS composition according to claim 4, wherein the flame-retardant component comprises an organo-phosphorous compound, preferably selected
from Mn⁺ (diethyl phosphinate) ⁻ₙ, wherein M is a metal having an oxidation number of 2 to 5, and n is an integer selected from 2 to 5, more specifically, preferably at least one selected from the group consisting of zinc (Zn), tin (Sn), calcium (Ca), magnesium (Mg), aluminium (Al), scandium (Sc), cerium (Ce), zirconium (Zr), hafnium (Hf), antimony (Sb), and tantalum (Ta), preferably Mn⁺ (diethyl phosphinate) ⁻ₙ, wherein M is a metal having an oxidation number of 3 to 5, and n is an integer selected from to 5, preferably at least one selected from the group consisting of tin (Sn), aluminium (Al), scandium (Sc), cerium (Ce), zirconium (Zr), hafnium (Hf), antimony (Sb), and tantalum (Ta), more preferably aluminium diethyl phosphinate salt; aluminium hipophosphinate, calcium hipophosphinate, triphenyl phosphate, resorcinol bis(diphenylphosphate) (RDP), resorcinol bis (2,6-dixylenyl phosphate) (RDX), bisphenol A diphenyl phosphate (BADP), tricresyl phosphate (TCP), dimethyl methylphosphonate (DMMP), pentaerythritol spiro dimethyl phosphonate (PSDP), aluminium methyl methylphosphonate (AMMP), and mixtures thereof.

7. The flame-retardant ABS composition according to claim 4, wherein the flame-retardant component comprises a combination of ammonium polyphosphate and aluminium diethyl phosphinate salt, preferably in a ratio comprised between 1:3 and 3:1 ratio by weight.

8. The flame-retardant ABS composition according to any one of claims 1 to 7, wherein it comprises between 5 wt% and 30 wt% of a flame-retardant component.

9. The flame-retardant ABS composition according to any one of claims 1 to 8, wherein the content of the EMA copolymer is comprised between 1 wt% and 6 wt%.

10. The flame-retardant ABS composition according to any one of claims 1 to 9, wherein the content of siloxane polymer is comprised between 0.5 wt% and 5 wt%.

11. The flame-retardant ABS composition according to any one of claims 1 to 10, wherein it further includes at least one auxiliary component, preferably selected from silica, lubricants, polymers with a reactive group, polyester, antioxidants, mould releasing agents, pigments, visible light stabilizers, UV stabilizers, blowing agents, foaming additives, antistatic agents, antiblocking agents, heat stabilizers, impact modifiers, plasticizers, biocides, flame-retardants, tackifiers, colorants, pigments, mineral fillers, and mixtures thereof.

12. The flame-retardant ABS composition according to claim 1, wherein it comprises between 5 wt% and 30 wt% of a flame-retardant component, between 1 wt% and 6 wt% of ethylene-methyl acrylate copolymer, and 0.5 wt% and 5 wt% of siloxane polymer, wherein the sum of the wt% of the components, including the wt% of ABS copolymer, is 100 wt%.

13. The flame-retardant ABS composition according to claim 1, wherein it comprises between 5 wt% and 30 wt% of a flame-retardant component, between 1 wt% and 6 wt% of ethylene-methyl acrylate copolymer, between 0.35 wt% and 3.5 wt% of siloxane polymer, and between 0.15 wt% and 1.5 wt% of silica, preferably fumed silica, wherein the sum of the wt% of the components, including the wt% of ABS copolymer, is 100 wt%.

14. A moulded article prepared from the flame-retardant ABS composition of any one of claims 1 to 13.

15. Use of the flame-retardant ABS composition of any one of claims 1 to 14 in extrusion, injection, and compression moulding.
